(19) Europäisches Patentamt

European Patent Office

Office européen des brevets

(11) **EP 0 689 281 B1**

(12) **EUROPÄISCHE PATENTSCHRIFT**

(45) Veröffentlichungstag und Bekanntmachung des Hinweises auf die Patenterteilung:
**18.03.1998  Patentblatt 1998/12**

(51) Int Cl.6: **H02M 3/156**

(21) Anmeldenummer: **95109031.5**

(22) Anmeldetag: **12.06.1995**

(54) **Schaltnetzteil mit sinusförmiger Stromaufnahme**

Switching power supply with sinusoidal current consumption

Alimentation à découpage avec consommation de courant sinusoidal

(84) Benannte Vertragsstaaten:
**DE FR GB IT**

(30) Priorität: **22.06.1994  DE 4421806**

(43) Veröffentlichungstag der Anmeldung:
**27.12.1995  Patentblatt 1995/52**

(73) Patentinhaber: **SIEMENS AKTIENGESELLSCHAFT
80333 München (DE)**

(72) Erfinder:
- **Lenz, Michael, Ing. grad.
D-85604 Zorneding (DE)**
- **Clawin, Detlef, Dr. Ing.
D-44789 Bochum (DE)**

(56) Entgegenhaltungen:
**WO-A-92/15145          US-A- 4 677 366**

- **PROCEEDINGS OF THE ANNUAL POWER ELECTRONICS SPECIALISTS CONFERENCE (PESC), MILWAUKEE, JUNE 26 - 29, 1989, Bd. 2, 26.Juni 1989 INSTITUTE OF ELECTRICAL AND ELECTRONICS ENGINEERS, Seiten 959-967, XP 000076920 WILLIAMS J B 'DESIGN OF FEEDBACK LOOP IN UNITY POWER FACTOR AC TO DC CONVERTER'**

**Beschreibung**

Die Erfindung betrifft ein Schaltnetzteil mit sinusförmiger Stromaufnahme gemäß dem Oberbegriff des Anspruch 1.

Ein derartiges Schaltnetzteil ist z.B. aus der US-A-4,677,366 bekannt. Ein Schaltnetzteil mit sinusförmiger Stromaufnahme enthält eine Vorsteuerungseinrichtung zur Entlastung des Spannungsregelkreises. Eine typische Anordnung dieser Art wird z.B. im Unitrode-Datenbuch, Anhang, Kapitel 6, Seite 6-1 bis 6-16 beschrieben. Aus beiden Dokumenten geht hervor, daß die theoretische Herleitung dieser genannten Vorsteuerungsfunktion ergibt, daß die Vorsteuerungsgroße $V_{in}$, siehe hierzu auch die Figur 6 auf Seite 6-8, exakt quadriert werden muß.

Das Dokument US-A-4 677 366 beschreibt ein Schaltnetzteil mit sinusförmiger Stromaufnahme mit einer Multipliziereinrichtung, der die momentane Eingangsspannung und der Ausgangsspannungsfehler zugeführt wird, wobei das Resultat durch ein Signal geteilt wird, das proportional zum Quadrat des Effektivwerts der Eingangsspannung ist.

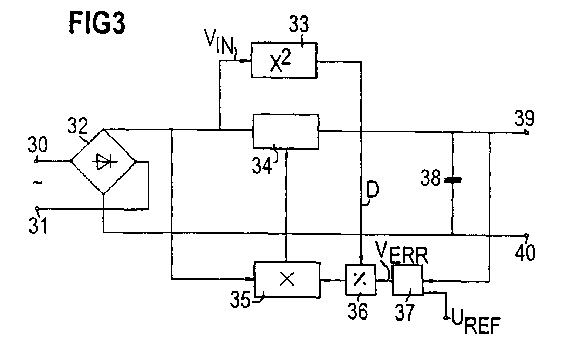

In Figur 3 ist ein Prinzipschaltbild einer derartigen Anordnung dargestellt. Mit 30, 31 sind Eingangsklemmen bezeichnet, denen die Wechselspannung zuführbar sind und mit einem Gleichrichter 32 verbunden sind. Der Ausgang des Gleichrichters ist über eine Regeleinheit 34 mit einem Kondensator 38 und Ausgangsklemmen 39, 40 verbunden. Die Spannung am Ausgang des Gleichrichters 32 wird abgegriffen und über nicht näher dargestellte Netzwerke zum einen einer Quadriereinheit 33 und zum anderen einer Multipliziereinheit 35 zugeführt. Die Quadrierereinheit erzeugt aus der ihr zugeführten Eingangsspannung $V_{IN}$ ein Signal

$$D = K_s \cdot K_f \cdot V_{IN}^2 \, ,$$

wobei $K_s$ eine Konstante und $K_f$ den Teilungsfaktor darstellt. Dieses Signal wird einer Divisionseinheit 36 zugeführt, welche des weiteren ein Fehlerspannungssignal $V_{ERR}$ über einen als PI Regler arbeitenden Operationsverstärker 37, der die Ausgangsspannung an der Klemme 39 mit einer Referenzspannung $U_{REF}$ vergleicht und auswertet, erhält. Die Divisionseinheit erzeugt nun aus den Signalen D und $V_{ERR}$ ein Spannungssignal

$$V_{DIV} = \frac{N}{D} K_d = \frac{K_d \cdot V_{ERR}}{K_s \cdot K_f \cdot V_{IN}^2} \, ,$$

wobei $K_d$ eine weitere Konstante ist. Dieses Signal wird mit der zweiten heruntergeteilten Eingangsspannung $K_{iN} \cdot V_{iN}$ multipliziert und dem Regler 34 zugeführt.

Die Realisierung einer derartigen Schaltung benötigt zum Quadrieren z.B. einen sogenannten Steilheitsmultiplizierer. Dadurch wird der gesamte Schaltungsaufwand relativ groß.

Eine exakte quadratische Abhängigkeit von $V_{in}$ als Vorsteuergröße bietet jedoch auch einige praktische Nachteile. So wird z.B. beim sogenannten "brown out" bei Versorgungsnetzen mit Regelung des Verbrauchs über die Spannungsamplitude die Stromaufnahme bei niedrigen Spannungen immer weiter ansteigen. Dies ist insbesondere in den USA üblich.

Aufgabe der vorliegenden Erfindung ist es ein Schaltnetzteil mit sinusförmiger Stromaufnahme anzugeben, das zum einen den oben genannten Nachteil nicht aufweist und zum anderen die Vorteile der quadratischen Kennlinie insbesondere für übliche Versorgungsspannungen von 110 bzw. 220 Volt aufweist.

Diese Aufgabe wird durch den kennzeichnenden Teil des Anspruchs 1 gelost. Weiterbildungen sind Kennzeichen der ansprüche.

Vorteil der erfindungsgemäßen Anordnung ist es, daß durch die Aufteilung in zwei lineare Teilfunktionen eine sogenannte Sockelteilfunktion ausgebildet werden kann, deren lineare Abhängigkeit ein für die Praxis günstigeres Verhalten ergibt, da bei extrem niedrigen Netzspannungen vom System her die Stromaufnahme begrenzt wird.

Die Erfindung wird nachfolgend anhand von zwei Figuren näher erläutert.

Es zeigen:

Figur 1      eine erfindungsgemäße Schaltungsanordnung zur Bildung der Vorsteuerungsgröße,

Figur 2      eine Übertragungsfunktion der erfindungsgemäßen Schaltung gemäß Figur 1 und eine Übertragungsfunktion gemäß dem Stand der Technik.

Figur 3      ein Blockschaltbild einer Anordnung gemäß dem Stand der Technik.

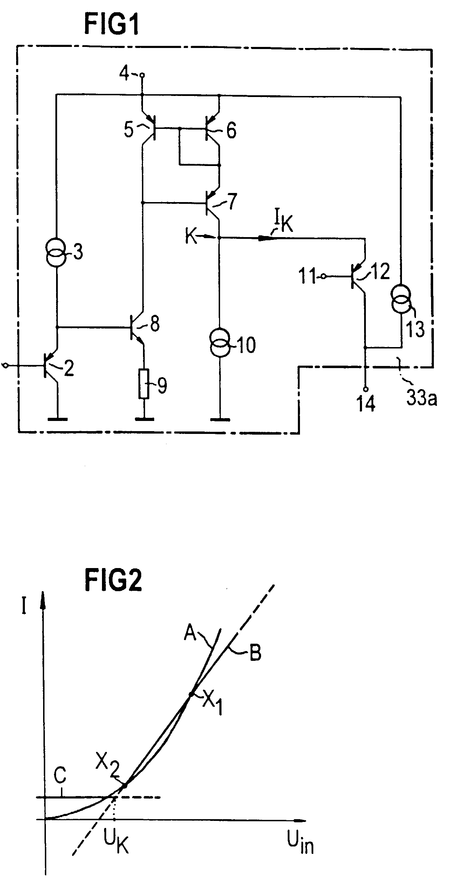

In Figur 2 ist mit A die quadratische Funktion einer Schaltung gemäß dem oben genannten Stand der Technik dargestellt. Die erfindungsgemäße Schaltungsanordnung ersetzt nun diese quadratische Funktion im Arbeitsbereich durch zwei lineare Teilfunktionen B, C, wobei B eine Gerade mit der Steigung m, m>0 ist und C eine Gerade mit der Steigung 0 und beide Geraden an der Stelle $U_K$ ineinander übergehen.

Die im Arbeitsbereich auftretenden Fehler können so hinreichend gering gehalten werden. Dies gilt insbesondere für den Fall, bei dem die beiden Schnittpunkte $X_1$, $X_2$ mit der quadratischen Funktion A bei den beiden Hauptnenneingangsspannungen 110 und 220 Volt gewählt werden. Als besonders günstig erweist sich gegenüber bisherigen Lösungen der lineare Sockelbereich C, da sich durch ihn ein für die Praxis besonders günstiges Verhalten ergibt. Durch diese Maßnahme wird bei extrem niedrigen Netzspannungen vom System her die Stromaufnahme begrenzt.

In Figur 1 ist mit 1 eine Eingangsklemme bezeichnet, der die Spannung $V_{IN}$ zuführbar ist. $V_{IN}$ kann z. B. der RMS-Wert der gleichgerichteten Eingangsspannung sein. Diese ist mit der Basis eines ersten pnp-Transistors 2 verbunden. Der Kollektor des pnp-Transistors 2 ist mit Masse verschaltet und der Emitter über eine Stromquelle 3 mit einer Versorgungsspannungsquelle 4 verbunden. Des weiteren ist der Emitter des Transistors 2 mit der Basis eines npn-Transistors 8 verbunden. Dessen Emitter ist über einen Widerstand 9 mit Masse verschaltet. Der Kollektor des Transistors 8 ist zum einen mit der Basis zweiten pnp-Transistors 7 und mit dem Kollektor eines dritten pnp-Transistors 5 verschaltet. Die Basis des Transistors 5 ist mit der Basis eines vierten pnp-Transistors 6 sowie mit dessen Kollektor und dem Emitter des Transistors 7 verbunden. Die Emitter der Transistoren 5 und 6 sind miteinander und mit der Versorgungsspannungsklemme 4 verschaltet. Der Kollektor des Transistors 7 ist zum einen über eine Stromquelle 10 mit Masse und zum anderen mit dem Emitter eines fünften pnp-Transistors 12 verbunden. Der Basis des Transistors 12 ist über eine Klemme 11 eine Referenzspannung zuführbar. Der Kollektor des Transistors 12 ist mit einer Ausgangsklemme 14 und über eine Stromquelle 13 mit der Versorgungsspannungsklemme verbunden.

Die in Figur 1 dargestellte Schaltungsanordnung bildet auf einfache Weise die in Figur 2 dargestellte aus den linearen Teilfunktionen B, C bestehende Übertragungsfunktion nach und kann beispielsweise die Quadriereinheit 33 gemäß Figur 3 ersetzen. In Figur 1 ist die gesamte Einheit daher mit 33a bezeichnet.

Die Eingangsspannung an 1 wird durch den Bufferverstärker 2, 3, 8 an den Widerstsand 9 übertragen. Der Strom im Kollektorzweig des Transistors 8 beträgt ca.

$$I_{C8} \approx \frac{U_{in}}{R_9}$$

Mit dem Stromspiegel bestehend aus den Transistoren 5, 6 und 7 wird am Knoten K die Differenz zwischen Spiegelstrom und dem Strom der Quelle 10 gebildet. Der Transistor 12 koppelt diese Stromdifferenz aus, sobald sie positiv ist. Dazu muß die Basis des Transistors 12 über die Klemme 11 auf ein passendes Potential gelegt werden. Der Ausgangsstrom der Schaltung besteht aus der Summe des Kollektorstromes von 12 und dem Strom 13.

Die entstehende in Figur 2 dargestellte Kennlinie kann wie folgt bestimmt werden: Der Differenzstrom des Knotens k ergibt sich zu

$$I_k = \frac{U_{in}}{R_9} - I_{10}$$

Der Transistor 12 öffnet nur bei positiven Werten von $I_k$,

so daß der Ausgangsstrom ab der Knickspannung $U_k$ mit der Steigung $\frac{1}{R_9}$ ansteigt. Die Nullstelle der Funktion

$$I_k = \frac{U_{in}}{R_9} - I_{10} = 0$$

liefert die Knickspannung $U_k$

$$U_k = I_{10} \cdot R_9$$

Die Konstante C ist gleich dem Strom $I_{12}$.

**Patentansprüche**

1. Schaltnetzteil mit sinusförmiger Stromaufnahme

   - mit einem Gleichrichter (32), dem eine sinusförmige Wechselspannung zuführbar ist und an dessen Ausgang eine gleichgerichtete Wechselspannung abgreifbar ist, wobei die gleichgerichtete Wechselspannung als Eingangssignal ($V_{IN}$) einer geschalteten Regeleinrichtung (34) zugeführt wird,
   - mit einer Multiplizierereinrichtung (35), der das Eingangssignal der geschalteten Regeleinrichtung ($V_{IN}$) und ein aus dem Ausgangssignal (39) der geschalteten Regeleinrichtung (34) abgeleitetes Signal zugeführt wird und die die beiden Größen multipliziert und ein Ausgangssignal erzeugt, das der geschalteten Regeleinrichtung (34) zugeführt wird,

   **dadurch gekennzeichnet,** daß

   - Schaltmittel (33a) vorgesehen sind, die anhand des Eingangssignals ($V_{IN}$) ein quasi-quadratisches Signal (D) erzeugen, wobei das quasi-quadratische Signal (D) aus einer mindestens zwei lineare Teilfunktionen (B, C) enthaltenden Übertragungsfunktion gebildet wird, wobei die Übertragungsfunktion das Quadrat des Eingangssignals ($V_{IN}$) in mindestens zwei Punkten annähert und
   - eine Teilereinrichtung (36) vorgesehen ist, in der das Ausgangssignal der geschalteten Regeleinrichtung (39) durch das quasi-quadratische Eingangssignal (D) geteilt wird, wobei die Teilereinrichtung des abgeleitete Signal erzeugt.

2. Schaltnetzteil nach Anspruch 1,
   **dadurch gekennzeichnet**, daß die erste lineare Teilfunktion (C) für die Spannung des Eingangssignals ($V_{IN}$) von 0 Volt bis zu einer Knickspannung ($U_k$) mit der Steigung 0 gilt und die zweite lineare Teilfunktion (B) ab der Knickspannung ($U_k$) eine Gerade mit einer Steigung m hat, wobei m > 0 ist.

3. Schaltungsanordnung nach Anspruch 1 oder 2, **dadurch gekennzeichnet,** daß

- ein Pufferverstärker (2, 3, 8, 9) vorgesehen ist, dem die Eingangsspannung ($V_{IN}$) zugeführt wird und der eine Last (9) speist,
- ein Stromspiegel (5, 6, 7) vorgesehen ist, dessen Eingangskreis das Ausgangssignal des ersten Pufferverstärkers (2, 3, 8, 9) zugeführt wird und dessen Ausgangsstrom ($I_k$) der Laststrecke eines Transistors (12) zugeführt wird und
- dem Steueranschluß des zweiten Transistors (12) eine Referenzspannung (11) zugeführt wird und der Ausgangskreis des zweiten Transistors (12) zum einen mit einer zweiten Stromquelle (13) und zum anderen mit einer Ausgangsklemme (14) verbunden ist.

4. Schaltungsanordnung nach Anspruch 3, **dadurch gekennzeichnet,** daß die Steigung m der zweiten linearen Teilfunktion (B) durch einen Widerstand (9) im Eingangskreis des Stromspiegels (5, 6, 7) einstellbar ist.

## Claims

1. Switched-mode power supply with sinusoidal current consumption

- having a rectifier (32) to which a sinusoidal AC voltage can be supplied and at whose output a rectified AC voltage can be picked off, the rectified AC voltage being supplied as an input signal ($V_{IN}$) to a switched control device (34),
- having a multiplier device (35) to which the input signal ($V_{IN}$) of the switched control device and a signal derived from the output signal (39) of the switched control device (34) are supplied and which multiplies the two variables and produces an output signal which is supplied to the switched control device (34),

characterized in that

- switching means (33a) are provided which use the input signal ($V_{IN}$) to produce a quasi-quadratic signal (D), the quasi-quadratic signal (D) being formed from a transfer function containing at least two linear partial functions (B, C), the transfer function approximating the square of the input signal ($V_{IN}$) at at least two points, and
- a divider device (36) being provided, in which the output signal (39) of the switched control device (34) is divided by the quasi-quadratic input signal (D), the divider device producing the derived signal.

2. Switched-mode power supply according to Claim 1, characterized in that the first linear partial function (C) for the voltage of the input signal ($V_{IN}$) applies from 0 volts to a kink voltage ($U_k$) with the gradient 0, and the second linear partial function (B) above the kink voltage ($U_k$) is a straight line with a slope m, while m > 0.

3. Circuit arrangement according to Claim 1 or 2, characterized in that

- a buffer amplifier (2, 3, 8, 9) is provided, to which the input voltage ($V_{IN}$) is supplied and which feeds a load (9),
- a current mirror (5, 6, 7) is provided, whose input circuit is supplied with the output signal from the first buffer amplifier (2, 3, 8, 9) and whose output current ($I_k$) is supplied to the load path of a transistor (12), and
- a reference voltage (11) is supplied to the control connection of the second transistor (12), and the output circuit of the second transistor (12) is connected both to a second current source (13) and to an output terminal (14).

4. Circuit arrangement according to Claim 3, characterized in that the slope m of the second linear partial function (B) can be adjusted by means of a resistor (9) in the input circuit of the current mirror (5, 6, 7).

## Revendications

1. Alimentation à découpage à absorption de courant de forme sinusoïdale, comportant

- un redresseur (32), auquel peut être envoyée une tension alternative de forme sinusoïdale et à la sortie duquel une tension alternative redressée peut être prélevée, la tension alternative redressée étant envoyée en tant que signal ($V_{IN}$) d'entrée à un dispositif (34) de régulation monté dans le circuit,
- un dispositif (35) multiplicateur auquel est envoyé le signal ($V_{IN}$) d'entrée du dispositif de régulation monté dans le circuit et un signal dérivé du signal (39) de sortie du dispositif (34) de régulation monté dans le circuit et qui multiplie les deux grandeurs et produit un signal de sortie, qui est envoyé au dispositif (34) de régulation monté dans le circuit, caractérisé en ce que
- il est prévu des moyens (33a), qui produisent à l'aide du signal ($V_{IN}$) d'entrée un signal (D) quasi quadratique, le signal (D) quasi quadratique étant formé d'au moins une fonction de transfert comportant deux fonctions partielles (B, C) linéaires, la fonction de transfert s'approchant du carré du signal ($V_{IN}$) d'entrée en au moins deux points et

- il est prévu un dispositif (36) de répartition, dans lequel le signal de sortie du dispositif (39) de régulation monté dans le circuit est réparti par le signal (D) d'entrée quasi quadratique, le dispositif de répartition produisant le signal dérivé.

2. Alimentation à découpage à absorption de courant de forme sinusoïdale selon la revendication 1, caractérisé en ce que la première fonction partielle (C) pour la tension du signal ($V_{IN}$) d'entrée est prise en compte pour 0 volt jusqu'à une tension $U_k$ de coude avec une pente nulle, et la seconde fonction partielle (B) linéaire au-delà de la tension de coude $U_k$ est une droite ayant une pente m, où m>0.

3. Alimentation à découpage à absorption de courant de forme sinusoïdale suivant la revendication 1 ou 2, caractérisé en ce que

- il est prévu un amplificateur (2, 3, 8, 9) tampon, auquel est envoyée la tension ($V_{IN}$) d'entrée et qui fournit une charge (9),
- il est prévu un miroir (5, 6, 7) de courant, au circuit d'entrée duquel est envoyé le signal de sortie du premier amplificateur (2, 3, 8, 9) tampon circuit, et dont le courant ($I_k$) de sortie est envoyé à la section de charge d'un transistor (12), et
- une tension (11) de référence est envoyée à la borne de commande du second transistor (12), et le circuit de sortie du second transistor (12) est relié d'une part à une seconde source (13) de courant et d'autre part à une borne (14) de sortie.

4. Alimentation à découpage à absorption de courant de forme sinusoïdale suivant la revendication 3, caractérisé en ce que la pente m de la seconde fonction partielle (B) linéaire peut être réglée par une résistance (9) dans le circuit d'entrée du miroir (5, 6, 7) de courant.

## FIG1

## FIG2

# FIG3